(19)

Europäisches
Patentamt

European
Patent Office

Office européen
des brevets

(11) **EP 2 410 185 A2**

(12) **EUROPÄISCHE PATENTANMELDUNG**

(43) Veröffentlichungstag:
**25.01.2012 Patentblatt 2012/04**

(51) Int Cl.:
***F04D 27/02*** *(2006.01)*        ***F02K 3/075*** *(2006.01)*

(21) Anmeldenummer: **11004585.3**

(22) Anmeldetag: **06.06.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **19.07.2010  DE 102010027587**

(71) Anmelder: **Rolls-Royce Deutschland Ltd & Co KG
15827 Blankenfelde-Mahlow (DE)**

(72) Erfinder: **Clemen, Carsten, Dr.
15749 Mittenwalde (DE)**

(74) Vertreter: **Weber, Joachim
Hoefer & Partner
Patentanwälte
Pilgersheimer Strasse 20
81543 München (DE)**

(54) **Zapfluftauslass im Nebenstromkanal eines Turbofantriebwerks**

(57)    Ein im Nebenstromkanal eines Turbofantriebwerks vorgesehener Zapfluftauslass umfasst ein in den Nebenstromkanal ragendes Zapfluftrohr und eine mit einer Vielzahl von in deren Boden vorgesehenen Luftaustrittsöffnungen ausgebildete Abdeckung, die als langgestrecktes, im Wesentlichen ovales, schalenförmiges, sich in Längsrichtung des Nebenstromkanals erstreckendes aerodynamisches Verkleidungselement (3) mit in Längsrichtung konvex gekrümmtem und in Querrichtung im Wesentlichen geradem Boden (10) sowie einer von diesem bogenförmig zu einer inneren Nebenstromkanalwand hin abstrebenden Seitenwand (11) ausgebildet ist. Durch den so gestalteten Zapfluftauslass werden die Druckverluste, akustischen Emissionen und Schwingungen im Nebenstromkanal verringert.

FIG. 1

EP 2 410 185 A2

**Beschreibung**

Die Erfindung betrifft einen Zapfluftauslass im Nebenstromkanal eines Turbofantriebwerks, der ein in den Nebenstromkanal ragendes, durch eine Höhe H und einen Durchmesser D definiertes Zapfluftrohr und eine Abdeckung mit einer Vielzahl von Luftaustrittsöffnungen umfasst.

Bei Turbofantriebwerken ist es bekannt, aus dem Kernstromkanal entnommene Zapfluft über eine Rohrleitung in den Nebenstromkanal zu leiten. Das in den Nebenstromkanal mit einem Durchmesser D und einer Höhe H ragende Zapfluftrohr ist mit einer zylindrischen, eine Vielzahl von im Wesentlichen runden Luftaustrittsöffnungen aufweisenden Abdeckung versehen, über die die Zapfluft in den Nebenstromkanal gelangt. Die bekannten Zapfluftauslässe sind insofern nachteilig, als aufgrund der zylindrischen Abdeckung hohe aerodynamische Druckverluste auftreten und außerdem ein unkontrolliertes Abströmen von Wirbeln zu verzeichnen ist. Dadurch kommt es zu erhöhten Verlusten, akustischen Emissionen und Schwingungen im Nebenstromkanal und letztlich zu einem höheren Treibstoffverbrauch und einem weniger stabilen Triebwerksbetrieb.

Der Erfindung liegt die Aufgabe zugrunde, den Zapfluftauslass im Nebenstromkanal eines Turbofantriebwerks so auszubilden, dass die Verluste sowie akustische Emissionen und Schwingungen verringert werden.

Erfindungsgemäß wird die Aufgabe mit einer gemäß den Merkmalen des Patentanspruchs 1 ausgebildeten aerodynamischen Verkleidung des Zapfluftauslasses gelöst. Zweckmäßige und vorteilhafte Weiterbildungen der Erfindung sind Gegenstand der Unteransprüche.

Der Kern der Erfindung besteht in einem aerodynamisch besonders vorteilhaft gestalteten Verkleidungselement für das in den Nebenstromkanal ragende Zapfluftrohr, so dass Druckverluste, Schwingungen und akustische Emissionen im Nebenstromkanal verringert werden und folglich der Treibstoffverbrauch reduziert und der Triebwerksbetrieb stabilisiert wird. Das Zapfluftrohr ist mit einer eine Vielzahl von Luftaustrittsöffnungen aufweisenden Abdeckung versehen, die erfindungsgemäß als langgestrecktes, im Wesentlichen ovales, schalenförmiges, sich in Längsrichtung des Nebenstromkanals erstreckendes aerodynamisches Verkleidungselement mit in Längsrichtung konvex gekrümmtem und in Querrichtung im Wesentlichen geradem Boden sowie einer von diesem bogenförmig zu einer inneren Nebenstromkanalwand hin abstrebenden Seitenwand ausgebildet ist.

In vorteilhafter Weiterbildung der Erfindung ist die Form des Verkleidungselements durch eine sich in einer x-z-Ebene erstreckende Längskurve und eine Vielzahl sich in einer z-y-Ebene erstreckender, zur Längsachse symmetrisch verlaufender Querkurven definiert.

In weiterer Ausbildung der Erfindung ist die Form der Längskurve durch die Gleichung

$$\mathtt{z/D} \; = \; \mathtt{1/XF^2 \cdot H/D \cdot \big[(x/D \; - \; x/D(X=0))/3 \cdot (1 \; - \; (x/D \; - \; x/D(X=0))/3] \, / \, [1 \, + \, (x/D - x/D(X=0))/3 \; \; ((1 - 2 \, XF)/XF^2)] \; + \; 0,05/0,3 \cdot H/D}$$

bestimmt, worin

z/D die dimensionslos gemachte z-Koordinate
x/D die dimensionslos gemachte x-Koordinate X-3XF
H die Höhe des Zapfluftrohres im Nebenstromkanal,
D der Durchmesser des Zapfluftrohres
XF ein frei wählbarer Parameter zwischen 0,33 und 0,64 und
X eine Laufvariable zwischen 0 und 3 sind, und wobei zur Erzielung eines z = 0 an der Vorder- und Hinterkante eine beliebige Form vorgesehen ist.

In weiterer Ausbildung der Erfindung ist die Form der an einer Vielzahl von Stützstellen xD entlang der Längskurve abgestützten Querkurven durch die Gleichung

$z/D = (1 - [y/D - y/D(Y=-1)]^8)^{(1/M)} \cdot z/D \, (x/D)$ bestimmt, wobei
z/D die dimensionslose z-Koordinate,
$y/D = Y \cdot (0,05/0,3 \cdot H/D + D/H \cdot z/D \, (x/D)$ die dimensionslose y-Koordinate,
x/D die dimensionslose x-Koordinate X-3XF,
H die Höhe des Zapfluftrohres im Nebenstromkanal,
D der Durchmesser des Zapfluftrohres
XF ein frei wählbarer Parameter zwischen 0,33 und 0,64,
M ein zwischen 0,5 und 3,5 frei wählbarer Parameter, und

Y eine Laufvariable zwischen -1 und 1 ist.

Ein Ausführungsbeispiel der Erfindung wird anhand der Zeichnung, in der

Fig. 1     eine beispielhafte perspektivische Ansicht eines an der Innenwand eines Nebenstromkanals angeordneten Verkleidungselements für einen Zapfluftauslass;

Fig. 2     eine schematische Darstellung des in den Nebenstromkanal ragenden, in ein x-y-z - Koordinatensystem eingeordneten Zapfluftrohres;

Fig. 3     zwei beispielhafte Kurvenverläufe des Verkleidungselements in der x-z-Ebene;

Fig. 4     zwei beispielhafte Kurvenverläufe des Verkleidungselements in der y-z-Ebene

zeigt, näher erläutert.

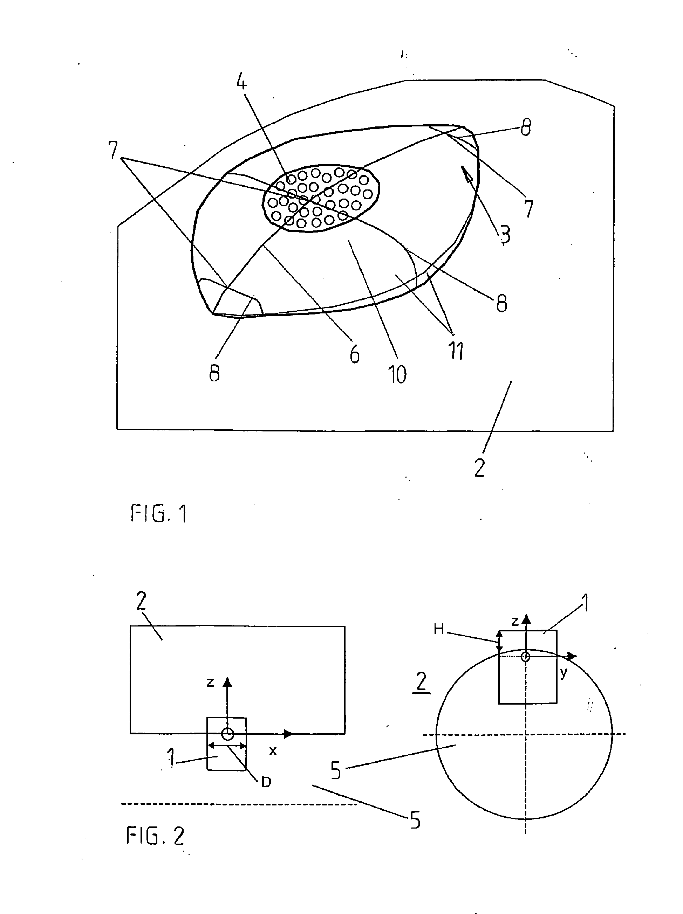

Das in Fig. 1 für eine bestimmte Höhe H und einen bestimmten Durchmesser D des Zapfluftrohres 1 im Nebenstromkanal 2 dargestellte Verkleidungselement 3 deckt das Zapfluftrohr 1 vollständig ab und lässt lediglich eine Mehrzahl von - hier beispielsweise kreisförmig angeordneten - Luftaustrittsöffnungen 4 frei, über die die aus dem Kernstromkanal 5 abgezapfte Luft in den Nebenstromkanal 2 abgeführt werden kann. Die Verkleidungsfläche des Verkleidungselements 3 ist durch eine sich in Längsrichtung des Triebwerks, das heißt in Richtung der Triebwerksachse bzw. in z-Richtung erstreckende und in z-Richtung konvex gekrümmte Längskurve 6 und eine Vielzahl von an diese an Stützstellen 7 anschließender, sich in y-Richtung erstreckender und zu den beiderseitigen Enden der Längskurve 6 hin allmählich flacher und kürzer werdender Querkurven 8 gebildet, die im oberen Bereich im Wesentlichen gerade verlaufen und an den Seiten relativ steil abfallen. Das Verkleidungselement 3 stellt somit eine mit der offenen Seite auf die Innenwand 9 des Nebenstromkanals 2 im Bereich des Zapfluftrohres 1 aufgesetzte, in der Draufsicht im weitesten Sinne ovale - jedoch an den die kleinen Radien aufweisenden Enden eher spitz zulaufende - Schale mit in Längsrichtung konvex gewölbtem und in Querrichtung im Wesentlichen geradem Boden 10 und konvex gewölbt vom Boden 10 ausgehenden Seitenwänden 11 dar. Durch die spezifische Form des Verkleidungselements 3 werden die Druckverluste minimiert und das unkontrollierte Abströmen von Wirbeln verhindert. Die Dimensionierung des so geformten Verkleidungselements 3 ergibt sich in Abhängigkeit von der Höhe H, in der das Zapfluftrohr 1 in den Nebenstromkanal ragt und vom Durchmesser D des Zapfluftrohres 1.

Zur Berechnung der die Form des Verkleidungselements 3 in Abhängigkeit von der Höhe H und dem Durchmesser D des Zapfluftrohres 1 bestimmenden Längs- und Querkurven 6, 8 wird, wie Fig. 2 zeigt, eine Verkleidungsgeometrie in zwei Ebenen definiert: Einer sich in Richtung der Triebwerksachse (x-Richtung, Längsrichtung) erstreckenden x-z-Ebene und einer senkrecht zu dieser verlaufenden y-z-Ebene, deren Ursprung jeweils im Mittelpunkt des Zapfluftrohres 1 am Eintritt in den Nebenstromkanal 2 liegt.

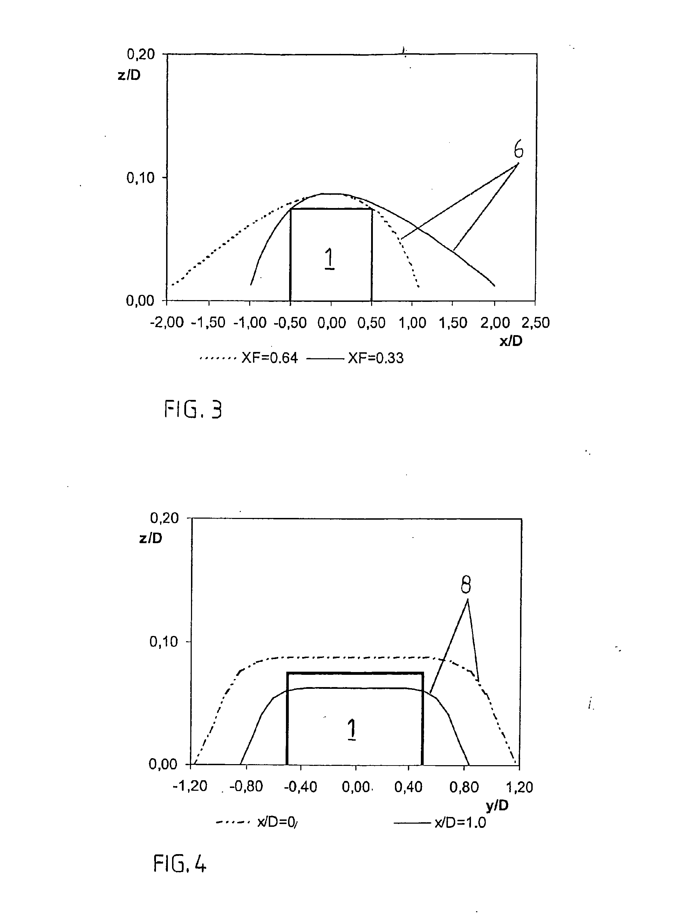

Die Form der in der x-z-Ebene liegenden Längskurve 6 bei y = 0 wird mit Hilfe der dimensionslosen Koordinate x/D mit der Hilfsgröße X und dem zwischen 0,33 und 0,64 frei wählbaren Parameter XF mit x/D = X - 3 XF definiert, wobei X eine Laufvariable von 0 bis 3 ist. Fig. 3 zeigt erfindungsgemäße Formen in der x-z-Ebene, die sich ergeben aus Gleichung (1):

$$z/D = 1/XF^2 \cdot H/D \cdot [(x/D - x/D(X=0))/3 \cdot (1 - (x/D - x/D(X=0))/3] / [1 + (x/D - x/D(X=0))/3 \ ((1 - 2\ XF)/XF^2)] + 0,05/0,3 \cdot H/D,$$

worin sind

z/D die dimensionslos gemachte z-Koordinate,
x/D die dimensionslos gemachte x-Koordinate,
H die Höhe des Zapfluftrohres im Nebenstromkanal,
D der Durchmesser des Zapfluftrohres,
XF ein frei wählbarer Parameter zwischen 0,33 und 0,64,
X eine Laufvariable zwischen 0 und 3.

Die in Fig. 3 gezeigten Formen beziehen sich auf einen Durchmesser D = 200mm und eine Höhe H = 15mm, wobei die punktierte Linie einem XF von 0,64 und die durchgezogene Linie einem XF von 0,33 entspricht. Um an der Vorderkante und der Hinterkante der Längskurve 6 des Verkleidungselements 3 ein z = 0 zu erreichen, kann eine beliebige Form gewählt werden, beispielsweise ein Kreissegment mit dem Radius r = 0,05/0,3 · H/D.

Fig. 4 zeigt aus einer Vielzahl von in der z-y-Ebene verlaufenden Querkurven 8 den beispielhaften Verlauf von zwei Querkurven in einem durch z/D und y/D gebildeten Koordinatensystem an den Stützstellen xD = 0 (strichpunktierte Linie) und xD = 1 (durchgezogene Linie), und zwar bei M = 0,5 und XF = 0,33 sowie D = 200mm und H = 15mm. In der y-z-Ebene wird die Kurvenform als z/D an jeder Stützstelle x/D = X - 3 · XF entlang einer jedem x/D zugeordneten y/D-Koordinate definiert. Die jeweilige y/D-Koordinate ergibt sich zu

$$y/D = Y \cdot (0,05/0,3 \cdot H/D + D/H \cdot z/D(x/D),$$

wobei Y eine Laufvariable von -1 bis 1 ist und z/D(xD) der nach Gleichung 1 berechnete z/D-Wert an der jeweiligen Stelle x/D ist. Der jeweilige z/D-Wert in der y-z-Ebene zur Definition der Querkurven 8ergibt sich aus Gleichung (2) zu

$$z/D = (1 - [y/D - y/D(Y=-1)]^8)^{(1/M)} \cdot z/D(x/D),$$

wobei M ein zwischen 0,5 und 3,5 frei wählbarer Parameter ist.

Durch an einer Vielzahl von Stützstellen x/D entlang der nach Gleichung 1 berechneten Längskurve 6 in der y-z-Ebene angeordneter, nach Gleichung 2 berechneter Querkurven 8 wird eine - wie oben angegeben ovale, schalenförmige - Verkleidungsfläche aufgespannt, deren Randkontur an die Innenkontur des Nebenstromkanals 2 angepasst wird und dem in Fig. 1 gezeigten, mit Luftaustrittsöffnungen 4 versehenen Verkleidungselement 3 für den in den Nebenstromkanal ragenden Teil eines Zapfluftrohrs 1 entspricht.

**Bezugszeichenliste**

1 Zapfluftrohr

2 Nebenstromkanal

3 Verkleidungselement

4 Luftaustrittsöffnungen

5 Kernstromkanal

6 Längskurve

7 Stützstellen

8 Querkurven

9 Innenwand von 2

10 Boden von 3

11 Seitenwand von 3

**Patentansprüche**

1. Zapfluftauslass im Nebenstromkanal eines Turbofantriebwerks, der ein in den Nebenstromkanal ragendes, durch eine Höhe H und einen Durchmesser D definiertes Zapfluftrohr (1) und eine Abdeckung mit einer Vielzahl von in deren Boden vorgesehenen Luftaustrittsöffnungen (4) umfasst, **dadurch gekennzeichnet, dass** die Abdeckung als langgestrecktes, im Wesentlichen ovales, schalenförmiges, sich in Längsrichtung des Nebenstromkanals (2) erstreckendes aerodynamisches Verkleidungselement (3) mit in Längsrichtung konvex gekrümmtem und in Querrichtung im Wesentlichen geradem Boden (10) sowie einer von diesem bogenförmig zu einer inneren Nebenstromkanalwand hin abstrebenden Seitenwand (11) ausgebildet ist..

2. Zapfluftauslass nach Anspruch 1, **dadurch gekennzeichnet, dass** die Form des Verkleidungselements (3) durch eine sich in einer x-z-Ebene erstreckende Längskurve (6) und eine Vielzahl sich in einer z-y-Ebene erstreckender, zur Längsachse symmetrischer Querkurven (8) definiert ist.

3. Zapfluftauslass nach Anspruch 2, **dadurch gekennzeichnet, dass** die Form der Längskurve (6) durch die Gleichung

```
z/D  =  1/XF²·H/D·[(x/D  -  x/D(X=0))/3·(1  -  (x/D  -
x/D(X=0))/3]  /  [1  +  (x/D  -  x/D(X=0))/3   ((1  -  2
XF)/XF²)] + 0,05/0,3·H/D
```

bestimmt ist, worin

z/D die dimensionslos gemachte z-Koordinate
x/D die dimensionslos gemachte x-Koordinate X-3XF
H die Höhe des Zapfluftrohres im Nebenstromkanal,
D der Durchmesser des Zapfluftrohres
XF ein frei wählbarer Parameter zwischen 0,33 und 0,64 und
X eine Laufvariable zwischen 0 und 3 sind, und wobei zur Erzielung eines z = 0 an der Vorder- und Hinterkante eine beliebige Form vorgesehen ist.

4. Zapfluftauslass nach Anspruch 2, **dadurch gekennzeichnet, dass** die Form der Querkurven (8) an einer Vielzahl von Stützstellen xD entlang der Längskurve (6) durch die Gleichung

$z/D = (1 - [y/D - y/D(Y=-1)]^8)^{(1/M)} \cdot z/D(x/D)$ bestimmt ist,
wobei
z/D die dimensionslose z-Koordinate,
$y/D = Y \cdot (0,05/0,3 - \cdot H/D + D/H \cdot z/D(x/D)$ die dimensionslose y-Koordinate,
x/D die dimensionslose x-Koordinate X-3XF,
H die Höhe des Zapfluftrohres im Nebenstromkanal,
D der Durchmesser des Zapfluftrohres
XF ein frei wählbarer Parameter zwischen 0,33 und 0,64,
M ein zwischen 0,5 und 3,5 frei wählbarer Parameter, und
Y eine Laufvariable zwischen -1 und 1 ist.

FIG. 1

FIG. 2

FIG. 3

FIG. 4